(19) Europäisches Patentamt
European Patent Office
Office européen des brevets

(11) **EP 4 489 127 A1**

(12) **EUROPEAN PATENT APPLICATION**
published in accordance with Art. 153(4) EPC

(43) Date of publication:
08.01.2025 Bulletin 2025/02

(51) International Patent Classification (IPC):
H01M 4/525 (2010.01)　　H01M 4/505 (2010.01)
H01M 4/1315 (2010.01)　　H01M 4/485 (2010.01)
H01M 10/0525 (2010.01)

(21) Application number: 22937764.3

(22) Date of filing: 19.04.2022

(52) Cooperative Patent Classification (CPC):
H01M 4/1315; H01M 4/485; H01M 4/505;
H01M 4/525; H01M 10/0525

(86) International application number:
PCT/CN2022/087693

(87) International publication number:
WO 2023/201526 (26.10.2023 Gazette 2023/43)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Ningde Amperex Technology Limited
Ningde, Fujian 352100 (CN)

(72) Inventors:
• CHENG, Shiyang
Ningde, Fujian 352100 (CN)
• SHITABA, Jumpei
Ningde, Fujian 352100 (CN)
• WU, Jianglin
Ningde, Fujian 352100 (CN)
• WU, Qi
Ningde, Fujian 352100 (CN)

(74) Representative: Icosa
83 avenue Denfert-Rochereau
75014 Paris (FR)

(54) **POSITIVE ELECTRODE MATERIAL, ELECTROCHEMICAL DEVICE AND ELECTRONIC DEVICE**

(57) A positive electrode material, including a substrate and a first region located on a surface of the substrate, where a molar ratio of iodine element to nickel element in the first region is 0.25 to 1.5. In this application, iodine ion lattice doping is introduced into the surface layer of the positive electrode material, so that the structural stability of the positive electrode material under high temperatures and high voltages and the kinetic performance under large-rate charge/discharge conditions are effectively improved, thereby reducing gas production in high-temperature and high-voltage storage and temperature rise under large-rate charge/discharge conditions of the electrochemical device, and improving the comprehensive performance of the electrochemical device.

FIG. 4

EP 4 489 127 A1

**Description**

**TECHNICAL FIELD**

This application relates to the field of energy storage, and specifically to a positive electrode material, an electrochemical device, and an electronic device.

**BACKGROUND**

With the popularization of consumer electronic products such as laptops, mobile phones, tablets, power banks, and drones, increasingly strict requirements are imposed on batteries in these products. For example, batteries are not only required to be light but also required to have high capacity and long service life. Lithium-ion batteries have occupied a dominant position in the market due to their outstanding advantages such as high energy density, good safety, no memory effect, and long service life.

To achieve higher energy density, lithium-ion batteries have been developing toward the direction of increasing voltage and lithium deintercalation. Under high voltage and high lithium deintercalation, issues such as oxygen release from the surface and structural phase transition of a positive electrode material are fully exposed, leading to problems such as rapid deterioration of battery cycling and gas production. In addition, poor kinetic performance of ternary positive electrode materials further limit their capacity performance, resulting in a series of problems such as severe temperature rise under large-rate charge/discharge conditions.

**SUMMARY**

In view of the foregoing problems in the prior art, this application provides a positive electrode material and an electrochemical device including such positive electrode material, so as to improve the structural stability of the positive electrode material under high temperatures and high voltages as well as the kinetic performance under large-rate charge/discharge conditions, thereby reducing gas production in high-temperature and high-voltage storage and temperature rise under large-rate charge/discharge conditions of the electrochemical device, and improving the comprehensive performance of the electrochemical device.

According to a first aspect, this application provides a positive electrode material including a substrate and a first region located on a surface of the substrate, where a molar ratio of iodine element to nickel element in the first region is 0.25 to 1.5. The capacity of a ternary positive electrode material is primarily generated through valence changes of the nickel element and cobalt element. Under deep lithium deintercalation, oxygen ions on a material surface have high activity, easily causing side reactions with an electrolyte. This easily causes formation of spinel on the material surface, inhibiting diffusion of lithium ions. In addition, the side reactions on the surface further increase interface impedance and also cause gas production on the material surface. The inventors of this application have found through research that lithium iodate can be locally formed by introducing iodine ion lattice doping into a surface layer of the positive electrode material and controlling the molar ratio of the iodine element to the nickel element to be 0.25 to 1.5. With extremely strong oxidation resistance, lithium iodate can serve as an external protective layer to improve the stability of an interface between the positive electrode material and the electrolyte under high temperatures and high voltages, thereby inhibiting gas production in high-temperature and high-voltage storage of the electrochemical device and improving the high-temperature cycling performance of the electrochemical device. In addition, it can reduce a valence state of a redox couple of a surface transition metal, increase electron hopping paths, and enhance the electronic conductivity, thereby improving the kinetic performance of the positive electrode material and therefore reducing temperature rise of the electrochemical device under large-rate charge/discharge conditions.

According to some embodiments of this application, the molar ratio of the iodine element to the nickel element in the first region is 0.5 to 1.5.

According to some embodiments of this application, the first region includes a second region, where the second region includes lithium iodate.

According to some embodiments of this application, the first region further includes a third region, where the third region includes nickel iodide.

In some embodiments, the third region is located between the substrate and the second region. In this case, the outward second region including lithium iodate has stronger oxidation resistance and thus can further improve the stability of the interface between the positive electrode material and the electrolyte under high temperatures and high voltages, thereby inhibiting gas production in high-temperature and high-voltage storage of the electrochemical device and improving the high-temperature cycling performance of the electrochemical device.

According to some embodiments of this application, a thickness of the second region is H2, where $10\,\text{nm} \leq \text{H2} \leq 60\,\text{nm}$. According to some embodiments of this application, a thickness of the third region is H3, where $2\,\text{nm} \leq \text{H3} \leq 60\,\text{nm}$.

In this case, the appropriate thicknesses of the second region and the third region can reduce impact on energy density of the electrochemical device while improving the stability of the interface between the positive electrode material and the electrolyte under high temperatures and high voltages.

According to some embodiments of this application, within a region from a surface of the positive electrode material to a depth of 2 μm away from the surface of the positive electrode material, along a depth direction of the positive electrode material, the molar ratio of the iodine element to the nickel element gradually decreases.

According to some embodiments of this application, in an XRD spectrum of the positive electrode material, a characteristic peak is present when $2\theta$ is within a range of 25.0° to 26.0°. In this application, the characteristic peak present when $2\theta$ is within the range of 25.0° to 26.0° is diffraction peak of lithium iodate on the surface. In this case, the lithium iodate on the surface can better protect the surface of the substrate, improving the stability of the interface between the positive electrode material and the electrolyte under high temperatures and high voltages, thereby inhibiting gas production in high-temperature and high-voltage storage of the electrochemical device and improving the high-temperature cycling performance of the electrochemical device.

According to some embodiments of this application, in the XRD spectrum of the positive electrode material, a peak intensity ratio of the characteristic peak present when $2\theta$ is within the range of 25.0° to 26.0° to a characteristic peak present when $2\theta$ is within a range of 17.0° to 19.0° is 0.1 to 0.3. In this application, the peak present when $2\theta$ is within the range of 17.0° to 19.0° is a diffraction peak of the substrate.

According to some embodiments of this application, a Raman spectrum of the positive electrode material has Raman shift peaks within a range of 100 cm$^{-1}$ to 140 cm$^{-1}$ and a range of 50 cm$^{-1}$ to 90 cm$^{-1}$. In this application, the Raman shift peak within the range of 100 cm$^{-1}$ to 140 cm$^{-1}$ represents a characteristic peak of the substrate, and the Raman shift peak within the range of 50 cm$^{-1}$ to 90 cm$^{-1}$ represents a characteristic peak of lithium iodate. This indicates that lithium iodate is present on the surface of the substrate, thereby improving the surface stability of the positive electrode material.

According to some embodiments of this application, an X-ray absorption near edge structure spectrum of the positive electrode material has absorption peaks within a range of 56 eV to 58 eV and a range of 60 eV to 62 eV. In this application, the absorption peak within the range of 56 eV to 58 eV represents lithium iodate, and the absorption peak within the range of 60 eV to 62 eV represents the substrate. This indicates that lithium iodate is present on the surface of the substrate, thereby improving the surface stability of the positive electrode material.

According to some embodiments of this application, based on a mass of the positive electrode material, a mass percentage of the iodine element is 0.2% to 5%. The percentage of the iodine element being within the above range can improve the stability of the interface between the positive electrode material and the electrolyte under high temperatures and high voltages, thereby inhibiting gas production in high-temperature and high-voltage storage of the electrochemical device and improving the high-temperature cycling performance of the electrochemical device. In addition, this can reduce a valence state of a redox couple of a surface transition metal, increase electron hopping paths, and enhance the electronic conductivity, thereby improving the kinetic performance of the positive electrode material and therefore reducing temperature rise of the electrochemical device under large-rate charge/discharge conditions.

According to some embodiments of this application, based on the mass of the positive electrode material, a mass percentage of lithium element is greater than or equal to 5%. In some embodiments, based on the mass of the positive electrode material, the mass percentage of the lithium element is less than or equal to 8%.

According to some embodiments of this application, based on the mass of the positive electrode material, the mass percentage of nickel element is greater than or equal to 30%. In some embodiments, based on the mass of the positive electrode material, the mass percentage of the nickel element is less than or equal to 60%.

This application further provides a preparation method of the foregoing positive electrode material. The preparation method includes mixing and roasting the substrate of the positive electrode material with lithium iodide to obtain the positive electrode material. According to some embodiments of this application, the roasting is performed at a temperature of 300°C to 700°C, for example, 350°C, 450°C, 550°C, or 650°C. In some embodiments, the roasting is performed at a temperature of 400°C to 600°C. In some embodiments, the roasting is performed in an inert atmosphere, for example, a nitrogen atmosphere.

According to some embodiments of this application, a total molar number of metal elements other than Li in the substrate is $n_M$, a molar number of Ni element in the substrate is $n_{Ni}$, a molar number of Co element in the substrate is $n_{Co}$, and a molar number of R element in the substrate is $n_R$, wherein $0 < n_{Ni}/n_M \leq 1$, $0 \leq n_{Co}/n_M < 1$, $0 \leq n_R/n_M < 1$, and the R element includes at least one of sodium (Na), magnesium (Mg), aluminum (Al), titanium (Ti), zirconium (Zr), niobium (Nb), yttrium (Y), chromium (Cr), vanadium (V), germanium (Ge), molybdenum (Mo), iron (Fe), copper (Cu), zinc (Zn), gallium (Ga), silver (Ag), tungsten (W), indium (In), tin (Sn), lead (Pb), antimony (Sb), lanthanum (La), cerium (Ce), calcium (Ca), or strontium (Sr). According to some embodiments of this application, $0.5 \leq n_{Ni}/n_M \leq 1$, $0 \leq n_{Co}/n_M \leq 0.5$, and $0 \leq n_R/n_M \leq 0.5$.

According to a second aspect, this application provides an electrochemical device including a positive electrode. The positive electrode includes a positive electrode current collector and a positive electrode active material layer, where the positive electrode active material layer includes the positive electrode material according to the first aspect.

According to a third aspect, this application provides an electronic device including the electrochemical device according to the second aspect.

In this application, iodine ion lattice doping is introduced into the surface layer of the positive electrode material, and the molar ratio of the iodine element to the nickel element is controlled within the range of 0.25 to 1.5, so that the structural stability of the positive electrode material under high temperatures and high voltages and the kinetic performance under large-rate charge/discharge conditions are effectively improved, thereby reducing gas production in high-temperature and high-voltage storage and temperature rise under large-rate charge/discharge conditions of the electrochemical device, and improving the comprehensive performance of the electrochemical device.

## BRIEF DESCRIPTION OF DRAWINGS

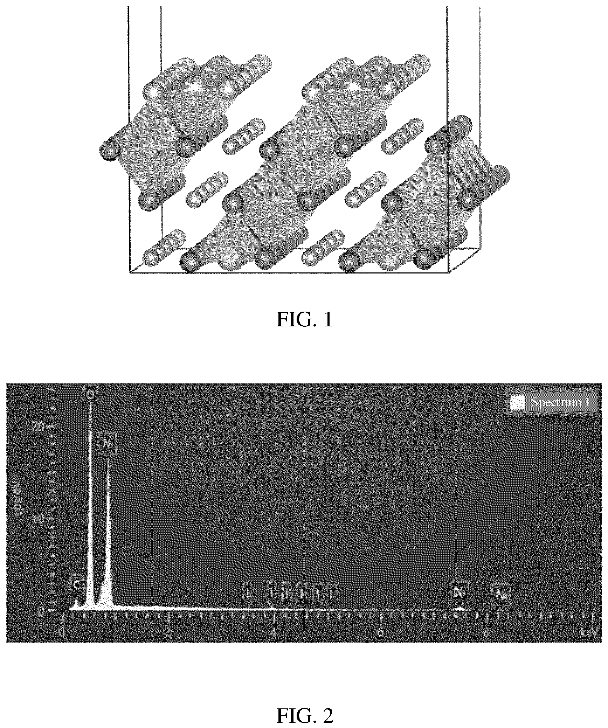

FIG. 1 is a schematic diagram of a crystal structure of a positive electrode material according to an embodiment of this application.
FIG. 2 is an EDX spectrum of a positive electrode material in Example 3 of this application.

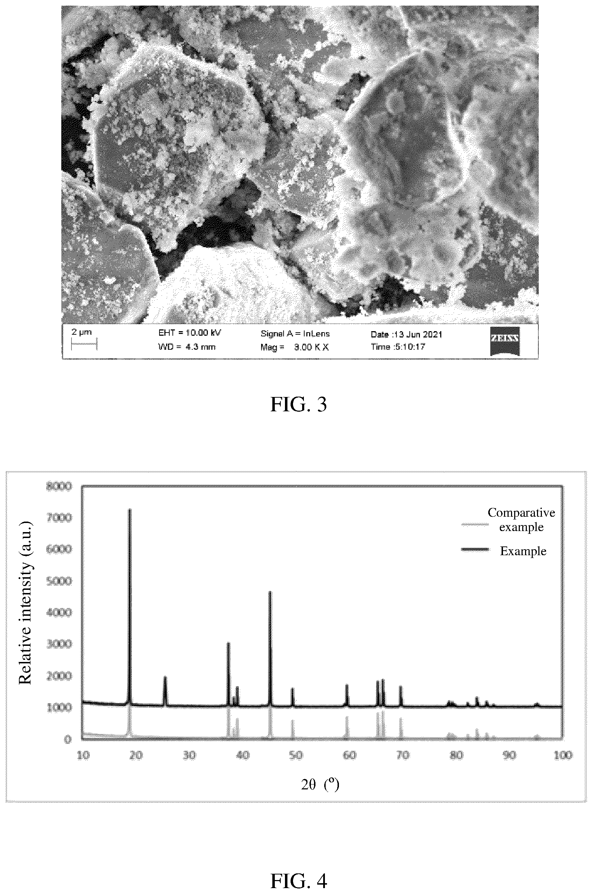

FIG. 3 is a SEM image of the positive electrode material in Example 3 of this application.
FIG. 4 shows XRD spectra of positive electrode materials in Example 8 and Comparative example 1 of this application.

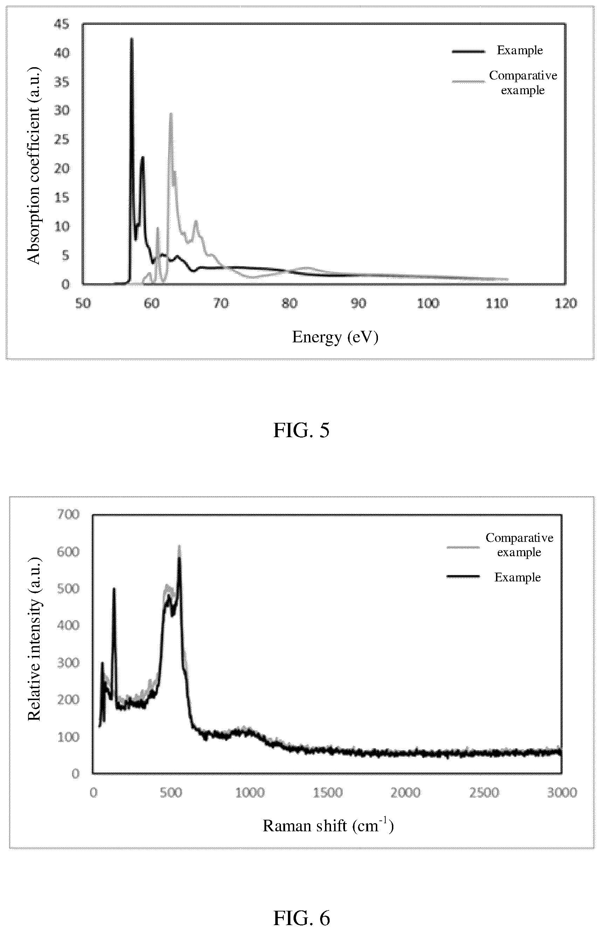

FIG. 5 shows X-ray absorption near edge structure spectra of the positive electrode materials in Example 8 and Comparative example 1 of this application.
FIG. 6 shows Raman spectra of the positive electrode materials in Example 8 and Comparative example 1 of this application.

## DESCRIPTION OF EMBODIMENTS

To make the objectives, technical solutions, and advantages of this application clearer, the following clearly and completely describes the technical solutions in this application with reference to some embodiments. Apparently, the described embodiments are some but not all embodiments of this application. Relevant embodiments described herein are illustrative and used to provide a basic understanding of this application. Some embodiments of this application should not be construed as limitations on this application.

For brevity, this specification specifically discloses only some numerical ranges. However, any lower limit can be combined with any upper limit to form a range not explicitly recorded, and any lower limit can be combined with another lower limit to form a range not explicitly recorded, and likewise, any upper limit can be combined with any other upper limit to form a range not explicitly recorded. In addition, each individually disclosed point or individual single numerical value itself can be a lower limit or an upper limit which can be combined with any other point or individual numerical value or combined with another lower limit or upper limit to form a range not explicitly recorded.

In the description of this specification, "more than" or "less than" is inclusive of the present number, unless otherwise specified.

Unless otherwise specified, the terms used in this application have well known meanings as commonly understood by persons skilled in the art. Unless otherwise specified, numerical values of parameters mentioned in this application may be measured by using various measurement methods commonly used in the art (for example, they may be tested by using the methods provided in some embodiments of this application).

A list of items connected by the terms "at least one of", "at least one piece of", "at least one type of", or other similar terms may mean any combination of the listed items. For example, if items A and B are listed, the phrase "at least one of A or B" means only A, only B, or A and B. In another example, if items A, B, and C are listed, the phrase "at least one of A, B, or C" means only A, only B, only C, A and B (excluding C), A and C (excluding B), B and C (excluding A), or all of A, B, and C. The item A may include a single constituent or a plurality of constituents. The item B may include a single constituent or a plurality of constituents. The item C may include a single constituent or a plurality of constituents.

According to a first aspect, this application provides a positive electrode material including a substrate and a first region located on a surface of the substrate, where a molar ratio of iodine element to nickel element in the first region is 0.25 to 1.5. The capacity of a ternary positive electrode material is primarily generated through valence changes of the nickel element and cobalt element. Under deep lithium deintercalation, oxygen ions on a material surface have high activity, easily causing side reactions with an electrolyte. This easily causes formation of spinel on the material surface, inhibiting diffusion of lithium ions. In addition, the side reactions on the surface further increase interface impedance and also cause gas production on the material surface. The inventors of this application have found through research that lithium iodate can be locally formed by introducing iodine ion lattice doping into a surface layer of the positive electrode material and controlling the molar ratio of the iodine element to the nickel element to be 0.25 to 1.5. With extremely strong oxidation resistance, lithium iodate can serve as an external protective layer to improve the stability of an interface between the positive electrode material and the electrolyte under high temperatures and high voltages, thereby inhibiting gas production in high-temperature and high-voltage storage of the electrochemical device and improving the high-temperature cycling performance of the electrochemical device. In addition, it can reduce a valence state of a redox couple of a surface transition metal, increase electron hopping paths, and enhance the electronic conductivity, thereby improving the kinetic performance of the positive electrode material and therefore reducing temperature rise of the electrochemical device under large-rate charge/discharge conditions.

According to some embodiments of this application, the molar ratio of the iodine element to the nickel element in the first region is 0.3, 0.4, 0.45, 0.55, 0.6, 0.65, 0.7, 0.75, 0.8, 0.85, 0.9, 0.95, 1.0, 1.05, 1.1, 1.15, 1.2, 1.25, 1.3, 1.35, 1.4, 1.45, or a range defined by any two of these values. In some embodiments, the molar ratio of the iodine element to the nickel element in the first region is 0.5 to 1.5.

The "first region" in this application may refer to a region from an outer surface of the positive electrode material to a depth of 100 nm in the positive electrode material.

According to some embodiments of this application, the first region includes a second region, where the second region includes lithium iodate.

According to some embodiments of this application, the first region further includes a third region, where the third region includes nickel iodide.

In some embodiments, the third region is located between the substrate and the second region. In this case, the outward second region including lithium iodate has stronger oxidation resistance and thus can further improve the stability of the interface between the positive electrode material and the electrolyte under high temperatures and high voltages, thereby inhibiting gas production in high-temperature and high-voltage storage of the electrochemical device and improving the high-temperature cycling performance of the electrochemical device.

According to some embodiments of this application, a thickness of the second region is H2, where $10\,nm \leq H2 \leq 60$ nm. In some embodiments, H2 is 13 nm, 15 nm, 17 nm, 20 nm, 23 nm, 25 nm, 27 nm, 27 nm, 29 nm, 32 nm, 35 nm, 37 nm, 40 nm, 43 nm, 45 nm, 47 nm, 50 nm, 53 nm, 55 nm, 57 nm, 59 nm, or a range defined by any two of these values.

According to some embodiments of this application, a thickness of the third region is H3, where $2\,nm \leq H3 \leq 60$ nm. In some embodiments, H3 is 3 nm, 5 nm, 7 nm, 9 nm, 10 nm, 12 nm, 15 nm, 17 nm, 20 nm, 23 nm, 25 nm, 27 nm, 29 nm, 32 nm, 35 nm, 37 nm, 40 nm, 43 nm, 45 nm, 47 nm, 50 nm, 55 nm, or a range defined by any two of these values.

In this case, the appropriate thicknesses of the second region and the third region can reduce impact on energy density of the electrochemical device while improving the stability of the interface between the positive electrode material and the electrolyte under high temperatures and high voltages.

According to some embodiments of this application, within a region from a surface of the positive electrode material to a depth of 2 $\mu$m away from the surface of the positive electrode material, along a depth direction of the positive electrode material, the molar ratio of the iodine element to the nickel element gradually decreases.

According to some embodiments of this application, in an XRD spectrum of the positive electrode material, a characteristic peak is present when $2\theta$ is within a range of 25.0° to 26.0°. In this application, the peak present when $2\theta$ is within the range of 25.0° to 26.0° is a diffraction peak of lithium iodate on the surface. In this case, the lithium iodate on the surface can better protect the surface of the substrate, improving the stability of the interface between the positive electrode material and the electrolyte under high temperatures and high voltages, thereby inhibiting gas production in high-temperature and high-voltage storage of the electrochemical device and improving the high-temperature cycling performance of the electrochemical device.

According to some embodiments of this application, in the XRD spectrum of the positive electrode material, a peak intensity ratio of the characteristic peak present when $2\theta$ is within the range of 25.0° to 26.0° to a characteristic peak present when $2\theta$ is within a range of 17.0° to 19.0° is 0.1 to 0.3. In this application, the peak present when $2\theta$ is within the range of 17.0° to 19.0° is a diffraction peak of the substrate.

According to some embodiments of this application, a Raman spectrum of the positive electrode material has Raman shift peaks within a range of 100 cm$^{-1}$ to 140 cm$^{-1}$ and a range of 50 cm$^{-1}$ to 90 cm$^{-1}$. In this application, the Raman shift peak within the range of 100 cm$^{-1}$ to 140 cm$^{-1}$ represents a characteristic peak of the substrate, and the Raman shift peak within the range of 50 cm$^{-1}$ to 90 cm$^{-1}$ represents a characteristic peak of lithium iodate. This indicates that lithium iodate is present on the surface of the substrate, thereby improving the surface stability of the positive electrode material.

According to some embodiments of this application, an X-ray absorption near edge structure spectrum of the positive electrode material has absorption peaks within a range of 56 eV to 58 eV and a range of 60 eV to 62 eV. In this application, the absorption peak within the range of 56 eV to 58 eV represents lithium iodate, and the absorption peak within the range of 60 eV to 62 eV represents the substrate. This indicates that lithium iodate is present on the surface of the substrate, thereby improving the surface stability of the positive electrode material.

According to some embodiments of this application, based on a mass of the positive electrode material, a mass percentage of the iodine element is 0.2% to 5%. The percentage of the iodine element being within the above range can improve the stability of the interface between the positive electrode material and the electrolyte under high temperatures and high voltages, thereby inhibiting gas production in high-temperature and high-voltage storage of the electrochemical device and improving the high-temperature cycling performance of the electrochemical device. In addition, this can reduce a valence state of a redox couple of a surface transition metal, increase electron hopping paths, and enhance the electronic conductivity, thereby improving the kinetic performance of the positive electrode material and therefore reducing temperature rise of the electrochemical device under large-rate charge/discharge conditions.

According to some embodiments of this application, based on the mass of the positive electrode material, a mass percentage of lithium element is greater than or equal to 5%. In some embodiments, based on the mass of the positive electrode material, the mass percentage of the lithium element is less than or equal to 8%.

According to some embodiments of this application, based on the mass of the positive electrode material, the mass percentage of nickel element is greater than or equal to 30%. In some embodiments, based on the mass of the positive electrode material, the mass percentage of the nickel element is less than or equal to 60%.

This application further provides a preparation method of the foregoing positive electrode material. The preparation method includes mixing and roasting the substrate of the positive electrode material with lithium iodide to obtain the positive electrode material. According to some embodiments of this application, the roasting is performed at a temperature of 300°C to 700°C, for example, 350°C, 450°C, 550°C, or 650°C. In some embodiments, the roasting is performed at a temperature of 400°C to 600°C. In some embodiments, the roasting is performed in an inert atmosphere, for example, a nitrogen atmosphere.

According to some embodiments of this application, a total molar number of metal elements other than Li in the substrate is $n_M$, a molar number of Ni element in the substrate is $n_{Ni}$, a molar number of Co element in the substrate is $n_{Co}$, and a molar number of R element in the substrate is $n_R$, wherein $0 < n_{Ni}/n_M \leq 1$, $0 \leq n_{Co}/n_M < 1$, $0 \leq n_R/n_M < 1$, and the R element includes at least one of sodium (Na), magnesium (Mg), aluminum (Al), titanium (Ti), zirconium (Zr), niobium (Nb), yttrium (Y), chromium (Cr), vanadium (V), germanium (Ge), molybdenum (Mo), iron (Fe), copper (Cu), zinc (Zn), gallium (Ga), silver (Ag), tungsten (W), indium (In), tin (Sn), lead (Pb), antimony (Sb), lanthanum (La), cerium (Ce), calcium (Ca), or strontium (Sr). According to some embodiments of this application, $0.5 \leq n_{Ni}/n_M \leq 1$, $0 \leq n_{Co}/n_M \leq 0.5$, and $0 \leq n_R/n_M \leq 0.5$.

According to a second aspect, this application provides an electrochemical device including a positive electrode. The positive electrode includes a positive electrode current collector and a positive electrode active material layer, where the positive electrode active material layer includes the positive electrode material according to the first aspect.

According to some embodiments of this application, the positive electrode active material layer further includes a conductive agent and a binder. In some embodiments, the binder includes but is not limited to polyvinyl alcohol, hydroxypropyl cellulose, diacetyl cellulose, polyvinyl chloride, carboxylated polyvinyl chloride, polyvinylpyrrolidone, polyurethane, polytetrafluoroethylene, polyvinylidene fluoride, styrene-butadiene rubber, or acrylic (acrylated) styrene-butadiene rubber. In some embodiments, the conductive agent includes but is not limited to a carbon-based material, a metal-based material, a conductive polymer, and a mixture thereof. In some embodiments, the carbon-based material is selected from graphite, carbon black, acetylene black, Ketjen black Carbon nanotubes, carbon fiber, graphene, or any combination thereof. In some embodiments, the metal-based material is selected from metal powder, metal fiber, copper, nickel, aluminum, or silver. In some embodiments, the conductive polymer is a polyphenylene derivative.

According to some embodiments of this application, the positive electrode further includes a positive electrode current collector. The positive electrode current collector may be a metal foil or a composite current collector. For example, an aluminum foil may be used. The composite current collector may be formed by forming a metal material (copper, copper alloy, nickel, nickel alloy, titanium, titanium alloy, silver, silver alloy, and the like) on a polymer matrix.

The electrochemical device of this application further includes a negative electrode. The negative electrode includes a negative electrode active material layer and a negative electrode current collector.

According to some embodiments of this application, the negative electrode active material layer includes a negative electrode active material, a conductive agent and a binder. In some embodiments, the negative electrode active material may include a material for reversibly intercalating/deintercalating lithium ions, lithium metal, lithium metal alloy, or a transition metal oxide. In some embodiments, the negative electrode active material includes at least one of a carbon material or a silicon material. The carbon material includes at least one of graphite or hard carbon. The silicon material includes at least one of silicon, a silicon-oxygen compound, a silicon-carbon compound, or silicon alloy. In some embodiments, the binder may include various binder polymers. In some embodiments, the binder includes at least one of polyvinylidene fluoride, a vinylidene fluoride-hexafluoropropylene copolymer, polyamide, polyacrylonitrile, polyacrylic ester, polyacrylic acid, polyacrylate, sodium carboxymethyl cellulose, polyvinylpyrrolidone, polyvinyl ether, polytetrafluoroethylene, polyhexafluoropropylene, or styrene-butadiene rubber. In some embodiments, any conductive material causing no chemical change can be used as the conductive agent. In some embodiments, the conductive agent includes at least one of conductive carbon black, acetylene black, carbon nanotubes, Ketjen black, carbon fiber, or graphene.

According to some embodiments of this application, the negative electrode current collector may be copper foil, nickel foil, stainless steel foil, titanium foil, nickel foam, copper foam, a polymer substrate coated with a conductive metal, or a combination thereof.

The electrochemical device of this application further includes an electrolyte. The electrolyte includes a lithium salt and a non-aqueous solvent.

In some embodiments of this application, the lithium salt is one or more selected from a group consisting of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, and lithium difluoroborate. For example, $LiPF_6$ may be used as the lithium salt.

The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An example of the linear carbonate compound is dimethyl carbonate (DMC), diethyl carbonate (DEC), dipropyl carbonate (DPC), methyl propyl carbonate (MPC), ethyl propyl carbonate (EPC), ethyl methyl carbonate (MEC), or a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

An example of the carboxylate compound is methyl formate, methyl acetate, ethyl acetate, n-propyl acetate, t-butyl acetate, methyl propionate, ethyl propionate, propyl propionate, γ-butyrolactone, decalactone, valerolactone, caprolactone, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

According to some embodiments of this application, in this electrochemical device, a separator is disposed between the positive electrode and a negative electrode to prevent short circuits. A material and shape of the separator used in some embodiments of this application are not specifically limited, and any technology disclosed in the prior art may be used for the separator. In some embodiments, the separator includes a polymer, an inorganic substance, or the like formed by a material stable to the electrolyte of this application. For example, the separator may include a substrate layer and a surface treatment layer. The substrate layer is a non-woven fabric, film, or composite film of a porous structure. The substrate layer is made of at least one of polyethylene, polypropylene, polyethylene terephthalate, or polyimide. Specifically, a polypropylene porous film, a polyethylene porous film, polypropylene non-woven fabric, polyethylene non-woven fabric, or a polypropylene-polyethylene-polypropylene porous composite film may be selected. The surface treatment layer is provided on at least one surface of the substrate layer, and the surface treatment layer may be a polymer layer or an inorganic substance layer, or may be a layer formed by mixing a polymer and an inorganic substance. The inorganic substance layer includes inorganic particles and a binder. The inorganic particles include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes at least one of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene. The polymer layer contains a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

According to some embodiments of this application, the electrochemical device of this application includes but is not limited to all types of primary batteries or secondary batteries. In some embodiments, the electrochemical device is a lithium secondary battery. In some embodiments, the lithium secondary battery includes but is not limited to a lithium metal secondary battery, a lithium-ion secondary battery, a lithium polymer secondary battery, or a lithium-ion polymer secondary battery.

According to a third aspect, an electronic device of this application may be any apparatus using the electrochemical device according to the second aspect.

In some embodiments, the electronic device includes but is not limited to a notebook computer, a pen-input computer, a mobile computer, an e-book player, a portable phone, a portable fax machine, a portable copier, a portable printer, a head-mounted stereo headset, a video recorder, a liquid crystal display television, a portable cleaner, a portable CD player, a mini disc, a transceiver, an electronic notebook, a calculator, a storage card, a portable recorder, a radio, a backup power supply, a motor, an automobile, a motorcycle, a motor bicycle, a bicycle, a lighting apparatus, a toy, a game console, a clock, an electric tool, a flashlight, a camera, a large household storage battery, or a lithium-ion capacitor.

**Examples and Comparative examples**

1. Preparation of positive electrode material

Step 1. A solution mixture containing $NiSO_4$ and $CoSO_4$ was prepared according to a molar ratio of elements Ni:Co=98:2; and the solution mixture was mixed with a precipitant (NaOH solution) and a complexing agent (ammonia water) for reaction, where a reaction time was controlled to be 40 hours, a concentration of the ammonia water was controlled to be 2.5 mol/L, and PH was controlled to be 13, to obtain a ternary precursor $Ni_{0.98}Co_{0.02}(OH)_2$.

Step 2. The ternary precursor $Ni_{0.98}Co_{0.02}(OH)_2$ obtained in Step 1 and lithium hydroxide were ground and mixed to uniformity at a molar ratio of 1:1.05; and the resulting mixture was calcined in an oxygen atmosphere at 680°C for 20 h, cooled down to room temperature at a rate of 10°C/min, and ultimately crushed and sieved to obtain a positive electrode material intermediate $LiNi_{0.98}Co_{0.02}O_2$.

Step 3. The positive electrode material intermediate $LiNi_{0.98}Co_{0.02}O_2$ obtained in Step 2 was mixed with LiI at a specified ratio (a specific mixing ratio is shown in Table 1, where an amount of LiI added was relative to a mass of the positive electrode material intermediate), and after mixing, the resulting mixture was sintered in an $N_2$ environment at a specified temperature (a specific temperature is shown in Table 1) to obtain a positive electrode material.

Table 1

| Examples and Comparative examples | Chemical formula of positive electrode material intermediate | Amount of LiI added (%) | Sintering temperature in step 3 (°C) |
|---|---|---|---|
| Example 1 | $LiNi_{0.98}Co_{0.02}O_2$ | 0.3 | 400 |
| Example 2 | $LiNi_{0.98}Co_{0.02}O_2$ | 0.3 | 500 |
| Example 3 | $LiNi_{0.98}Co_{0.02}O_2$ | 0.3 | 600 |
| Example 4 | $LiNi_{0.98}Co_{0.02}O_2$ | 0.3 | 700 |
| Example 5 | $LiNi_{0.98}Co_{0.02}O_2$ | 0.5 | 600 |
| Example 6 | $LiNi_{0.98}Co_{0.02}O_2$ | 0.7 | 600 |
| Example 7 | $LiNi_{0.98}Co_{0.02}O_2$ | 1.0 | 600 |
| Example 8 | $LiNi_{0.98}Co_{0.02}O_2$ | 1.4 | 600 |
| Example 9 | $LiNi_{0.98}Co_{0.02}O_2$ | 1.8 | 600 |
| Comparative example 1 | $LiNi_{0.98}Co_{0.02}O_2$ | 0.0 | - |
| Comparative example 2 | $LiNi_{0.98}Co_{0.02}O_2$ | 0.12 | 300 |
| Comparative example 3 | $LiNi_{0.98}Co_{0.02}O_2$ | 2.4 | 600 |

2. Preparation of lithium-ion battery

(1) Preparation of lithium-ion button battery

A binder polyvinylidene fluoride (PVDF), a conductive agent conductive carbon black (Super P), and the positive electrode material at a weight ratio of (5:5:95) were fully stirred and mixed to uniformity in N-methylpyrrolidone (NMP) to prepare a positive electrode slurry.

The positive electrode slurry was uniformly applied onto a single side of an aluminum foil, with a coating thickness of 40 μm; and after drying, rolling was performed to form an electrode required, where a surface density of the coated electrode was 14 mg/cm$^2$, and the electrode was punched into a disc with a diameter of 14 mm to form a single-sided electrode plate.

A separator was punched into a disc with a diameter of 18 mm; a negative electrode used is a lithium metal sheet with a diameter of 18 mm; and propylene carbonate (PC), ethylene carbonate (EC), and diethyl carbonate (DEC) (at a weight ratio of 1:1:1) were mixed to form a solvent, and $LiPF_6$ was added into the solvent and mixed to uniformity to obtain an electrolyte, where based on a mass of the electrolyte, a mass percentage of $LiPF_6$ is 12.5%.

The positive electrode plate, separator, negative electrode plate (lithium sheet), and other accessories such as the electrolyte and a battery housing were transferred into a glove box (with a water content less than 11 ppm).

These components were stacked from bottom to top to be assembled into a battery, and the electrolyte was injected into the battery. The battery was packaged in a packaging machine to obtain a button battery.

(2) Preparation of lithium-ion pouch battery

Preparation of positive electrode

A binder polyvinylidene fluoride (PVDF), a conductive agent conductive carbon black (Super P), and the positive electrode material at a weight ratio of (1.5:1.5:97) were fully stirred and mixed to uniformity in N-methylpyrrolidone (NMP) to prepare a positive electrode slurry.

The positive electrode slurry was uniformly applied onto both sides of an aluminum foil, with a coating thickness of 40 $\mu$m on each side; and after drying, rolling was performed to form an electrode required, where a surface density of the coated electrode was 14 mg/cm$^2$.

Preparation of negative electrode

Artificial graphite, styrene-butadiene rubber, and sodium carboxymethylcellulose (CMC) at a mass ratio of 96:2:2 were mixed with deionized water and well stirred to obtain a negative electrode slurry. The negative electrode slurry was applied onto a copper foil with a thickness of 12 $\mu$m. Drying and cold pressing were performed, followed by cutting and tab welding to obtain a negative electrode.

Preparation of electrolyte

In a dry argon environment, propylene carbonate (PC), ethylene carbonate (EC), and diethyl carbonate (DEC) (at a weight ratio of 1:1:1) were mixed to form a solvent, and $LiPF_6$ was added into the solvent and mixed to uniformity to obtain an electrolyte, where based on a mass of the electrolyte, a mass percentage of $LiPF_6$ is 12.5%.

Preparation of separator

A polyethylene (PE) porous polymer film was used as a separator.

Preparation of lithium-ion battery

The positive electrode, separator, and negative electrode were stacked in sequence, ensuring that the separator was located between the positive electrode and the negative electrode for separation. Then, winding was performed to obtain an electrode assembly. The electrode assembly was placed into an outer packaging aluminum-plastic film, followed by electrolyte injection and packaging. Through processes such as formation, degassing, and edge trimming, a lithium-ion pouch battery was obtained.

**Test method**

**1. Content test for iodine element, nickel element, and lithium element in positive electrode material**

(1) Content test for elements in surface layer

A concentration and molar ratio of Ni and I elements at a depth of 0 to 100 nm were measured using an XPS method in combination with ion polishing.

(2) Content test for elements in positive electrode material

Contents of the elements were measured through an ICP test.

**2. Thickness test for second region and third region in positive electrode material**

The lithium-ion battery was fully discharged to a voltage below 3.5V at a current density of 10 mA/cm$^2$, left standing for 10 min, and then disassembled in a glove box to obtain a positive electrode plate; and the positive electrode plate was transferred to a chamber of a scanning electron microscope (Model: FEI Vion Plasma FIB) provided with focused ion beams, and was processed to obtain a sample for analysis by a transmission scanning electron microscope (STEM, model: FEI Titan3 G2 60-300). A surface of the sample was protected with Pt and was processed using a Ga ion beam, ensuring that a thickness of the sample was not greater than 100 nm; and the sample was cleaned in a low-voltage mode to remove residual surface from the sample during processing.

The sample was observed under a STEM, and thicknesses of the second region and third region were measured. Thicknesses of at least three positions were collected, and an average value was taken.

### 3. XRD peak intensity ratio test

An XRD spectrum of the positive electrode material was obtained through an XRD diffraction test, where when $2\theta$ was within a range of 25.0° to 26.0°, a strongest peak intensity was $I_1$, when $2\theta$ was within a range of 17.0° to 19.0°, a strongest peak intensity was $I_2$, and an XRD peak intensity ratio is equal to $I_1/I_2$.

### 4. Raman spectrum test and X-ray absorption near edge structure test

A Raman spectrometer and an X-ray absorption near edge structure spectrometer were used to test the positive electrode material, for determining whether there was a Raman shift peak within a range of 50 cm$^{-1}$ to 90 cm$^{-1}$ in a Raman spectrum and whether there was an absorption peak within a range of 56 eV to 58 eV in an X-ray absorption near edge structure spectrum.

### 5. Test for thickness swelling rate at 85°C

The lithium-ion pouch battery was charged to 4.35 V at 0.5C at 25°C and then charged to 0.05C at the constant voltage of 4.35 V; a thickness of the lithium-ion battery at that time was measured using a micrometer and recorded as $H_{11}$; after that, the lithium-ion battery was stored in an oven at 85°C for 12 hours; and 12 hours later, a thickness of the lithium-ion battery at that time was measured using the micrometer and recorded as $H_{12}$.
Thickness swelling rate of lithium-ion battery after 12 hours of storage at

$$85°C\ (\%) = (H_{12} - H_{11})/H_{11} \times 100\%.$$

### 6. Test for cycling capacity retention rate at 45°C

The lithium-ion pouch battery was placed in a thermostat at 45°C, and left standing for 30 min until the lithium-ion battery reached a constant temperature; the lithium-ion battery reaching a constant temperature was charged to 4.35 V at a constant current of 1.5C at 45°C, charged to 0.02C at a constant voltage of 4.35 V, and then discharged to 3.0 V at a constant current of 4C; a discharge capacity in this cycle was measured and recorded as the first cycle discharge capacity; the battery was charged/discharged in this way for 300 cycles; and a discharge capacity at the 300th cycle of the battery was measured and recorded as the 300th cycle discharge capacity.

Capacity retention rate of lithium-ion battery after 300 cycles at 45°C (%) = 300th cycle discharge capacity/first cycle discharge capacity $\times$ 100%.

### 7. Discharge temperature rise at 1.5C/8C

The lithium-ion pouch battery was placed in a 25°C thermostat and left standing for 30 minutes until the lithium-ion battery reached a constant temperature. The lithium-ion battery reaching a constant temperature was charged to a voltage of 4.35 V at a constant current of 1.5C, and then charged to a current of 0.05C at a constant voltage of 4.35 V Subsequently, the lithium-ion battery was discharged to 3.0 V at 8C. During this process, the lithium-ion battery was wrapped with thermal insulation cotton, and temperatures of the head, tail, and middle of the lithium-ion battery were separately measured using a multi-channel thermometer, and an average value was taken.

### 8. Gram capacity test

In a 25°C environment, the lithium-ion button battery was charged at a constant current of 0.5C and a constant voltage until an upper limit voltage was 4.25 V, and then discharged at a constant current of 0.2C until a final voltage was 2.8 V; and a discharge capacity of the lithium-ion battery was calculated. A ratio of the discharge capacity of the lithium-ion battery to the mass of the positive electrode material was calculated and recorded as the gram capacity of the lithium-ion battery.

**Test result**

**Table 2-1**

| Example and Comparative example | Positive electrode material | | | | | | | |
|---|---|---|---|---|---|---|---|---|
| | I/Ni molar ratio | Percentage of I (%) | H2 (nm) | H3 (nm) | H2+H3 (nm) | XRD peak intensity ratio | Raman peak from 50 cm$^{-1}$ to 90 cm$^{-1}$ | Absorption peak from 56 eV to 58 eV |
| Example 1 | 0.43 | 0.27 | 17.2 | 2.33 | 19.5 | 0.11 | Found | Found |
| Example 2 | 0.37 | 0.26 | 14.6 | 3.38 | 18.0 | 0.10 | Found | Found |
| Example 3 | 0.31 | 0.25 | 12.2 | 4.40 | 16.6 | 0.11 | Found | Found |
| Example 4 | 0.25 | 0.24 | 12.8 | 8.00 | 20.8 | 0.12 | Found | Found |
| Example 5 | 0.48 | 0.39 | 19.2 | 6.92 | 26.1 | 0.13 | Found | Found |
| Example 6 | 0.65 | 0.53 | 25.9 | 9.33 | 35.3 | 0.14 | Found | Found |
| Example 7 | 0.90 | 0.73 | 35.6 | 12.83 | 48.5 | 0.16 | Found | Found |
| Example 8 | 1.19 | 0.97 | 47.3 | 17.03 | 64.3 | 0.26 | Found | Found |
| Example 9 | 1.47 | 1.20 | 58.3 | 21.00 | 79.3 | 0.29 | Found | Found |
| Comparative example 1 | 0.00 | 0.00 | - | - | - | / | / | / |
| Comparative example 2 | 0.10 | 0.10 | - | - | - | / | / | / |
| Comparative example 3 | 1.80 | 2.01 | 60.0 | 33.0 | 93.0 | 0.4 | Found | Found |

Note: H2 is the thickness of the second region that includes lithium iodate, and H3 is the thickness of the third region that includes nickel iodide.

**Table 2-2**

| Example and Comparative example | Lithium-ion battery | | | |
|---|---|---|---|---|
| | Thickness swelling rate at 85°C (%) | Cycling capacity retention rate at 45°C (%) | Discharge temperature rise at 1.5C/8C (°C) | Gram capacity at 0.2C at 25°C (mAh/g) |
| Example 1 | 17 | 76.7 | 45 | 194.0 |
| Example 2 | 16 | 76.6 | 44 | 194.7 |
| Example 3 | 14 | 76.4 | 43 | 195.8 |
| Example 4 | 15 | 76.8 | 43 | 196.7 |
| Example 5 | 12 | 77.3 | 41 | 198.4 |
| Example 6 | 10. | 78.1 | 39 | 201.0 |
| Example 7 | 8 | 79.3 | 37 | 204.7 |
| Example 8 | 5 | 80.7 | 33 | 209.2 |
| Example 9 | 1 | 82.1 | 30 | 213.4 |
| Comparative example 1 | 39 | 60 | 61 | 165.87 |
| Comparative example 2 | 35 | 62.0 | 58 | 185.00 |
| Comparative example 3 | 30 | 65.0 | 55 | 193.00 |

From the comparison of Examples 1 to 9 and Comparative examples 1 to 3 in Tables 2-1 and 2-2, it can be seen that when the molar ratio of the iodine element to the nickel element in the surface layer of the positive electrode material is within the range of 0.25 to 1.5, the lithium-ion battery has excellent high-temperature storage performance, excellent high-temperature cycling performance, and low temperature rise under large-rate charge/discharge conditions. It is speculated that a possible reason is that when the molar ratio of the iodine element to the nickel element in the surface layer of the positive electrode material is within the range of 0.25 to 1.5, lithium iodate can be locally formed. With extremely strong oxidation resistance, lithium iodate can serve as an external protective layer to improve the stability of an interface between the positive electrode material and the electrolyte under high temperatures and high voltages, thereby inhibiting gas production in high-temperature and high-voltage storage of the lithium-ion battery and improving the high-temperature cycling performance of the lithium-ion battery. In addition, it can reduce a valence state of a redox couple of a surface transition metal, increase electron hopping paths, and enhance the electronic conductivity, thereby improving the kinetic performance of the positive electrode material and therefore reducing temperature rise of the lithium-ion battery under large-rate charge/discharge conditions.

When the molar ratio of the iodine element to the nickel element is extremely low (in Comparative example 2), a local lithium iodate coating layer cannot be formed. Therefore, the high-temperature storage performance, high-temperature cycling performance, and rate performance of the lithium-ion battery cannot be effectively improved.

When the molar ratio of the iodine element to the nickel element is extremely high (in Comparative example 3), although the high-temperature storage performance and high-temperature cycling performance of the lithium-ion battery can be effectively improved, excessive I element forms a heterogeneous structure that coats the surface of the positive electrode active material, hindering the diffusion of lithium ions, thereby leading to severe temperature rise of the lithium-ion battery under large-rate charge/discharge conditions.

Although some exemplary embodiments of this application have been illustrated and described, this application is not limited to the disclosed embodiments. On the contrary, persons of ordinary skill in the art will recognize that some modifications and changes can be made to the described embodiments without departing from the spirit and scope of this application described in the appended claims.

**Claims**

1. A positive electrode material, comprising a substrate and a first region located on a surface of the substrate, wherein a molar ratio of iodine element to nickel element in the first region is 0.25 to 1.5.

2. The positive electrode material according to claim 1, wherein the molar ratio of the iodine element to the nickel element in the first region is 0.5 to 1.5.

3. The positive electrode material according to claim 1, wherein the first region comprises a second region, and the second region comprises lithium iodate.

4. The positive electrode material according to claim 3, wherein the first region further comprises a third region; the third region comprises nickel iodide; and the positive electrode material satisfies at least one of the following conditions (a) to (c):

   (a) the third region is located between the substrate and the second region;
   (b) a thickness of the second region is H2, wherein 10 nm $\leq$ H2 $\leq$ 60 nm; or
   (c) a thickness of the third region is H3, wherein 2 nm $\leq$ H3 $\leq$ 60 nm.

5. The positive electrode material according to claim 1, wherein within a region from a surface of the positive electrode material to a depth of 2 $\mu$m away from the surface of the positive electrode material, along a depth direction of the positive electrode material, the molar ratio of the iodine element to the nickel element gradually decreases.

6. The positive electrode material according to claim 1, wherein in an XRD spectrum of the positive electrode material, a characteristic peak is present when $2\theta$ is within a range of 25.0° to 26.0°.

7. The positive electrode material according to claim 6, wherein in the XRD spectrum of the positive electrode material, a peak intensity ratio of the characteristic peak present when $2\theta$ is within the range of 25.0° to 26.0° to a characteristic peak present when $2\theta$ is within a range of 17.0° to 19.0° is 0.1 to 0.3.

8. The positive electrode material according to claim 1, wherein the positive electrode material satisfies at least one of the following conditions (d) or (e):

(d) a Raman spectrum of the positive electrode material has Raman shift peaks within a range of 100 cm$^{-1}$ to 140 cm$^{-1}$ and a range of 50 cm$^{-1}$ to 90 cm$^{-1}$; or
(e) an X-ray absorption near edge structure spectrum of the positive electrode material has absorption peaks within a range of 56 eV to 58 eV and a range of 60 eV to 62 eV.

9. The positive electrode material according to claim 1, wherein the positive electrode material satisfies at least one of the following conditions (g) to (i):

(f) based on a mass of the positive electrode material, a mass percentage of iodine element is 0.2% to 5%;
(g) based on a mass of the positive electrode material, a mass percentage of lithium element is 5% to 8%;
(h) based on a mass of the positive electrode material, a mass percentage of nickel element is 30% to 60%;
(i) a total molar number of metal elements other than lithium in the substrate is nm, a molar number of nickel element in the substrate is $n_{Ni}$, a molar number of cobalt element in the substrate is $n_{Co}$, and a molar number of R element in the substrate is $n_R$, wherein $0 < n_{Ni}/n_M \leq 1$, $0 \leq n_{Co}/n_M < 1$, $0 \leq n_R/n_M < 1$, and the R element includes at least one of sodium, magnesium, aluminum, titanium, zirconium, niobium, yttrium, chromium, vanadium, germanium, molybdenum, iron, copper, zinc, gallium, silver, tungsten, indium, tin, lead, antimony, lanthanum, cerium, calcium, or strontium.

10. An electrochemical device, comprising a positive electrode, wherein the positive electrode comprises a positive electrode current collector and a positive electrode active material layer, and the positive electrode active material layer comprises the positive electrode material according to any one of claims 1 to 9.

11. An electronic device, comprising the electrochemical device according to claim 10.

FIG. 1

FIG. 2

FIG. 3

FIG. 4

FIG. 5

FIG. 6

<table>
<tr><td align="center">**INTERNATIONAL SEARCH REPORT**</td><td>International application No.<br>**PCT/CN2022/087693**</td></tr>
</table>

**A.    CLASSIFICATION OF SUBJECT MATTER**

H01M 4/525(2010.01)i;   H01M 4/505(2010.01)i;   H01M 4/1315(2010.01)i;   H01M 4/485(2010.01)i;   H01M 10/0525(2010.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

ENTXT, CNTXT, WPABS, CNKI, VEN, ENTXTC: 阴极, 正极, 掺杂, 包, 覆, 碘化???, 碘酸锂, 碘酸???, 镍, 锂镍, 镍钴????, 三元, 煅烧, 烧结, Cathode, positive electrode, doped, wrapped, coated, iodinated???, Lithium iodate, iodic acid? ? ?, Nickel, Lithium Nickel, Nickel Cobalt????, Ternary, calcined, sintered

**C.    DOCUMENTS CONSIDERED TO BE RELEVANT**

| Category* | Citation of document, with indication, where appropriate, of the relevant passages | Relevant to claim No. |
|---|---|---|
| X | CN 104518211 A (PANASONIC CORP.) 15 April 2015 (2015-04-15)<br>description, paragraphs 5-111 | 1-2, 9-11 |
| X | CN 101673823 A (FUJIAN NORMAL UNIVERSITY) 17 March 2010 (2010-03-17)<br>description, page 3 paragraph 3-page 8 paragraph 5 | 1-2, 9-11 |
| A | CN 109449414 A (JIANGXI ZHONGQI RUIHUA NEW ENERGY TECHNOLOGY CO., LTD.) 08 March 2019 (2019-03-08)<br>entire document | 1-11 |
| A | CN 113871588 A (WUHAN UNIVERSITY OF TECHNOLOGY) 31 December 2021 (2021-12-31)<br>entire document | 1-11 |
| A | US 2012052375 A1 (JOHNSON, C. et al.) 01 March 2012 (2012-03-01)<br>entire document | 1-11 |

☐ Further documents are listed in the continuation of Box C.          ☑ See patent family annex.

| | |
|---|---|
| *        Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **13 December 2022** | **04 January 2023** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/087693**

| Patent document cited in search report | | | Publication date (day/month/year) | Patent family member(s) | | | Publication date (day/month/year) |
|---|---|---|---|---|---|---|---|
| CN | 104518211 | A | 15 April 2015 | US | 2015093646 | A1 | 02 April 2015 |
| | | | | JP | 2015092455 | A | 14 May 2015 |
| | | | | CN | 104518211 | B | 28 September 2018 |
| | | | | US | 9831489 | B2 | 28 November 2017 |
| | | | | JP | 6478090 | B2 | 06 March 2019 |
| CN | 101673823 | A | 17 March 2010 | CN | 101673823 | B | 26 September 2012 |
| CN | 109449414 | A | 08 March 2019 | None | | | |
| CN | 113871588 | A | 31 December 2021 | None | | | |
| US | 2012052375 | A1 | 01 March 2012 | US | 2015333328 | A1 | 19 November 2015 |
| | | | | US | 2014038056 | A1 | 06 February 2014 |
| | | | | US | 8557438 | B2 | 15 October 2013 |
| | | | | US | 9126844 | B2 | 08 September 2015 |
| | | | | US | 10214428 | B2 | 26 February 2019 |

Form PCT/ISA/210 (patent family annex) (January 2015)